# EUROPEAN PATENT SPECIFICATION

(11) **EP 0 604 846 B1**
(45) Date of publication and mention of the grant of the patent: **29.10.1997**
(21) Application number: 93120293.1
(22) Date of filing: 16.12.1993
(51) Int. Cl.: C08F 10/00, C08F 4/654, C08F 4/655

(54) **Components and catalysts for the polymerization of olefins**
Komponenten und Katalysatoren für die Olefinpolymerisation
Composés et catalyseurs pour la polymérisation d'oléfines

(30) Priority: 22.12.1992 IT MI922919
(43) Date of publication of application: 06.07.1994
(73) Proprietor: Montell Technology Company bv, 2132 MS Hoofddorp (NL)
(72) Inventor: Cuffiani, Illaro, I-44100 Ferrara (IT); Sacchetti, Mario, I-44100 Ferrara (IT); Pennini, Gianni, I-44044 Porotto (IT)
(74) Representative: Zanoli, Enrico

(56) References cited:
- EP-A- 0 395 083
- EP-A- 0 553 806
- US-A- 4 089 808

## Description

The present invention refers to components and catalysts for the polymerization of olefins, in particular ethylene and mixtures thereof with the alpha-olefins CH₂=CHR, wherein R is a hydrocarbon radical having 1-10 carbon atoms.

Catalysts are known for the polymerization of mixtures of ethylene and alpha-olefins which are capable of producing LLDPE with relatively narrow molecular weight distribution and also capable of uniformly distributing the comonomer in the polymeric chain.

Examples of catalysts of this type are described in USP 4,089,808 wherein the solid component of the catalysts is prepared by decomposing adducts of MgCl₂.nAlRX^{I}₂.pAlX₃, with Ti, V or Zr compounds and in USP 4,218,339, wherein the solid component is prepared by allowing compounds having the formula XₙMg(OR)₂₋ₙ or RMgX to react with titanium compounds containing at least two Ti-OR links and with halogenating agents.

In the above mentioned patents, the possibility of supporting the components on inert carriers such as silica and alumina is indicated. The catalysts which are obtained however are not suitable for the polymerization in gas phase in that they are lacking in the necessary morphological characteristics and/or give polymers with properties, such as for instance the bulk density, unsuitable for carrying out the gas phase processes.

USP 4,399,054 and EP-A-395083 describe spherical form catalyst components obtained by reacting Ti compounds, in particular TiCl₄, with MgCl₂-alcohol adducts. The obtained catalyst components are reported to be highly effective in the preparation of olefin polymers with high bulk density.

Processes in gas phase on fluidized bed used in particular for producing HDPE and LLDPE always find more and more industrial applications.

Therefore, it is of interest to have catalysts suitable for the conditions of the gas phase process and capable of giving polymers with the requested characteristics.

Now catalysts components have been found usable for gas phase polymerization of ethylene and mixtures thereof with alpha-olefins, also capable of giving polymers with relatively narrow MWD and with uniform distribution of the comonomers in the polymeric chain.

The components of the invention comprise, supported on a magnesium dihalide in spherical form and having porosity (determined by the mercury method described hereinafter) higher than 0.5 cm³/g, the product of the reaction of:
(I) a titanium compound containing at least one link selected from Ti-halogen and Ti-OR^{I}, wherein R^{I} is a hydrocarbon radical with 1-12 carbon atoms or a COR group; with
(II) the solid obtained from the decomposition, to form magnesium dihalide or a product containing magnesium dihalide, of a complex having the formula:

   MgX₂·nAlR^{II}X^{I} ₂·pAlX₃ (A)

   wherein X is chlorine or bromine; X^{I} is chlorine, bromine or an alkoxy group; R^{II} is a hydrocarbon radical containing up to 20 carbon atoms; n is a number from 1 to 6; p is a number from 0 to 1; (n+p) is a number comprised between 1 and 6, inclusive.

Preferably the mercury porosity of the magnesium dihalide, used as support, is comprised between 0.8 and 2.2 cm³/g and the sizes of pores are such that at least 50% of the porosity is due to pores having radius higher than 10000 Å.

Magnesium dihalides in form of spherical particles having properties suitable to form the support of the catalytic component of the invention have sizes comprised between 5 and 150 µm. For particles in spherical form those in which the ratio between the greater axis and the smaller is equal to or lower than 1.5 and preferably lower than 1.3 are intended.

Dihalides used in supporting are obtained by partial or total dealcoholation of spherical adduct MgX₂.nR^{I}OH, wherein X is halogen and R^{I} is a hydrocarbon radical containing 1-12 carbon atoms, containing a number of moles of alcohol such to be solid at room temperature and liquid at temperature of about 100-130°C.
Generally n is a number comprised between 2 and 6.

In the case in which R^{I} is ethyl, propyl or butyl, the number of moles of alcohol is preferably 3.

Among the magnesium dihalides used as support MgCl₂ is the preferred.

The dealcoholation of the spheralized adduct is carried out by bringing the alcohol content from the starting value to lower values, for example about 1 mole, by heating at the temperature increasing from about 50°C to about 150°C and working under nitrogen stream; the adduct is then further dealcoholated, still by thermal treatment, until the alcohol content is brought to 0.1-0.3 mole per mole of magnesium dihalide.

As an alternative, the spheralized adduct containing about 1 mole of alcohol is allowed to react with compounds capable of decomposing the adduct itself by reaction with the OH group of the alcohol until the alcohol is even completely removed from the adduct.

Examples of reactive compounds are the organometallic compounds of elements from group I to III of the Periodic System and the halogenated compounds of Si and Sn. In particular it is possible to mention Al-alkyls, for example Al-trialkyls and Al-dialkylhalides, SiCl₄ and SnCl₄.

Methods for the preparation of the spheralized adducts are described for example in USP 4,469,648; 5,100,849; and 4,829,034.

Operative conditions for the thermal and chemical dealcoholation are described in USP 4,399,054 and in European patent applications EP-A-553805 and in EP-A-553806.

Dealcoholated spherical supports thus obtained are impregnated with a hydrocarbon solution of the titanium compound (I) and thereafter are reacted with the complex (A) dissolved in an excess of Al-dialkyl halide; alternatively the support is first treated with the solution of complex (A) and thereafter the solid is reacted with the titanium compound (I).

Among the titanium compound (I), those having formula XₙTi(OR^{I})_{y-n} are preferred wherein X is halogen, R^{I} is a hydrocarbon radical having 1-12 carbon atoms or a COR group, y is the valence of titanium and n is a number comprised between 0 and y inclusive.

Representative halogenated titanium compounds having the above described formula are:
TiCl₄, TiBr₄, TiCl₃, Ti(O-n-C₃H₇)₂Cl₂, TiCl₃OCH₃, Ti(O-n-C₄H₉)Cl₃, Ti(O-n-C₄H₉)₂Cl₂.

Titanium compounds belonging to the above described formula and not containing halogen are those having the formula Ti(OR)₄ wherein R is a hydrocarbon radical having 1-12 carbon atoms. Among the titanium compounds not containing halogen, Ti(O-n-C₃H₇)₄, Ti(O-n-C₄H₉)₄ and Ti(OC₆H₅)₄ are preferred.

When these compounds not containing halogen are used, the reaction conditions with the complex (A) give rise to at least partial halogenation of these compounds.

Among the titanium compounds (I) Ti-amides and carboxylated titanium compounds, can be further mentioned, such as for instance Ti[N(C₂H₅)₂]Cl_{3,} Ti[N(C₆H₅)₂]Cl_{3,} Ti(OOC-C₆H₅)Cl₃.

Titanium compounds can also be used in a mixture with vanadium or zirconium compounds.

Among complex (A) having formula MgX₂.nAlR^{II}X^{I}₂.pAlX₃, those in which X and X^{I} are chlorine and R^{II} is a hydrocarbon radical containing 1-10 carbon atoms are preferred; particularly preferred are MgCl₂·2.5Al(i-C₄H₉)Cl₂, MgCl₂·1.5Al(n-C₄H₉)Cl₂ and MgCl₂·2AlEtCl₂.

The decomposition of the complex (A) to form the magnesium dihalide or products containing magnesium dihalide is obtained by reacting the complex (A) with the titanium compound (I) itself, working at a temperature between -10°C and 140°C, preferably between O and 50°C, in the presence of an inert hydrocarbon diluent or dissolving the complex in a AlR^{II}X₂ compound.

Another decomposition method of the complex consists in reacting this, after having supported it on the magnesium halide, with gaseous anhydrous hydrochloric acid or with an organometallic compound of an element from the groups I to III of the Periodic Table, such as Al-trialkyl, or also with an aliphatic or cycloaliphatic alcohol.

Methods for the preparation of the complex and the decomposition thereof to form magnesium dihalide or products which contain it are described in USP 4,089,808 and 4,472,520.

In order to obtain polymers showing a narrow MWD and/or to obtain elastomer copolymers of alpha-olefins endowed with valuable elastomeric properties after vulcanization, it is advantageous to incorporate an electron donor compound in the solid catalytic component selected for example from ethers, esters, amines, ketones and silicon compounds.

In particular, the internal electron donor can be selected from ethers, for example dialkyl or aryl-alkyl ethers, and alkyl, cycloalkyl and aryl esters of carboxylic acids.

In particular among the ethers it is possible to mention the di-n-butylether, di-isopropyl-ether, di-isoamylether and anisole whereas among the esters ethyl acetate, cyclohexylacetate, methyl-p-toluate, ethyl-p-anisate and the esters of the phthalic and maleic acid, in particular n-butylphthalate, di-isobutylphthalate, di-n-octylphthalate can be mentioned.

Other examples are the silicon compounds containing at least one OR group, such as for example methyl-cyclohexyl-dimethoxysilane, diphenyldimethoxysilane, methyl-t-butyl-dimethoxysilane.

The internal electron donor compound is preferably used in a molar ratio electron donor/Mg in the range comprised between 0.05:1 and 1:1.

Components of the invention with Al-alkyl compounds in particular Al-trialkyls, such as for example Al-trimethyl, Al-triethyl, Al-triisobutyl, Al-tri-n-butyl, form catalysts endowed with high activity in the polymerization of olefins CH₂=CHR, wherein R is hydrogen or a hydrocarbon radical having 1-10 carbon atoms.

In the case that olefin polymers and copolymers showing a narrow MWD have to be prepared, the catalysts of the invention can comprise, besides the solid component and the Al-alkyl components also an electron donor compound (external electron donor). In catalysts for the preparation of LLDPE and elastomeric copolymers of ethylene with a narrow MWD, electron donor compounds containing at least one nitrogen atom, such as for example 2,2,6,6-tetramethylpiperidine, N-methyl-2,2,6,6,-tetramethylpiperidine, tetramethylpiperidine, tetramethyldiaminoethane, 2-2-dimethyldihydroquinoline, Al-diethyl-2,2,6,6,-tetramethylpiperidide, and organic nitriles, such as for example benzonitrile and anisonitrile are particularly suitable as external donors.

Other examples of external electron donor compounds are the silicon compounds containing at least one Si-OR link previously described.

External electron donor compounds are used in molar ratio electron donor/magnesium generally comprised between 0.1 and 10, preferably comprised between 0.5 and 2.

As previously indicated the catalysts are particularly suitable for the polymerization of ethylene and its mixtures with alpha olefins to form linear low density or very low density polyethylenes (LLDPE and VLDPE) or elastomeric copolymers containing smaller proportions of a diene (EPR and EPDM).

For example, the catalysts can be used in processes for the preparation of (co)polymer of ethylene, containing up to 20% by mole of an alpha-olefin having from 3 to 12 carbon atoms, said alpha olefin being preferably 1-butene, 1-hexene, 4-methyl-1-pentene or 1-octene. The catalysts can also be used in processes for the preparation of elastomeric copolymers of ethylene with alpha-olefin having from 3 to 12 carbon atoms, said copolymers containing from 20% to 80% by mole of units deriving from ethylene and, optionally, containing also smaller proportion of units deriving from a diene or polyene.

Catalysts comprising an internal electron donor compound and an external electron donor compound and in which the titanium compound present in the solid component is a tetrahalide, in particular TiCl₄, are also suitable for the stereoregular polymerization of alpha olefins, in particular of propylene.

The catalysts of the invention are particularly suitable for gas phase polymerization in that, given their good morphological stability, it is possible to obtain polymers in spherical form endowed with valuable properties such as for example a high bulk density.

The polymerization in gas phase is preferably carried out according to the method described in International patent application WO92/21706 and in Italian patent application MI-92-A-000589. In the processes therein described, a precontact step of the component of the catalyst, a prepolymerization step and a gas phase polymerization step in one or more reactors in series on a fluidized or mechanically stirred bed are comprised.

The following examples are given to illustrate and not to limit the invention itself.

The properties indicated are determined according to the following methods:
- Porosity and surface area with mercury: are determined by immersing a known amount of the sample in a known amount of mercury inside a dilatometer and then hydraulically increasing the mercury pressure gradually up to 2000 kg/cm². The introduction pressure of the mercury into the pores depends on the diameter of the pores themselves. The measurement is carried out by using a porosimeter "Porosimeter 2000 series" by Carlo Erba. From the data of the diminishing of the mercury volume and pressure values applied the porosity, the pore distribution and the surface area is calculated.
- Size of the particles of the catalysts: are determined by a method based on the principle of the optical diffraction of the monochromatic light laser by the apparatus "Malvern Instr. 2600".
- MIE flow index: ASTM-D 1238
- MIF flow index: ASTM-D 1238
- Flowability: is the time taken for 100 g of polymer to flow through a funnel, the outlet hole of which has a 1.25 cm diameter and walls are inclined of 20°C to the vertical.
- Bulk density: DIN-53194
- Morphology and granulometric distribution of the polymer particles: ASTM-D 1921-63
- Fraction soluble in xylene: determined at 25°C
- Content of comonomer: percentage by weight of comonomer determined by I.R. spectrum.
- Real density: ASTM-D 792

### EXAMPLE 1

### PREPARATION OF THE SPHERICAL SUPPORT (ADDUCT MgCl₂/EtOH)

The magnesium chloride and alcohol adduct was prepared according to the method described in the example 2 of USP 4,399,054, but working at 2000 RPM instead of 10000 RPM.

The adduct containing about 3 moles of alcohol and having average size of about 60 µm, was subjected to thermal treatment within a temperature range varying from 50 to 150°C until a partial dealcoholation was obtained with values of residual alcohol of about 35%, followed by a further thermal treatment within the temperature range varying from 100 to 130°C until a value of residual alcohol equal to about 10% by weight was obtained.

### PREPARATION OF COMPLEX (A)

Into a 350 cc glass apparatus, provided with mechanical stirrer and under anhydrous nitrogen stream, 57.2 g of EADC (Ethyl-Al-dichloride), 4.5 g of AlCl₃ and 9.5 of anhydrous MgCl₂ were introduced.

The suspension was heated to 120°C and this temperature was maintained for 5 hours, thus obtaining a homogeneous solution which after cooling to 90°C, was diluted with 15 cc of toluene. The resulting liquid after cooling to room temperature maintained its stability and clearness.

### PREPARATION OF THE SOLID COMPONENT

Into a 750 ml glass reactor provided with mechanical stirrer, 58 g of the spherical support obtained according to the previously described method were introduced. Under stirring at room temperature, 120 ml of hexane, 58 ml of Ti(OBU)₄ and 11 ml of anisole were introduced. The whole was kept under stirring for 30 minutes under these conditions; the temperature was then lowered to 0°C and the solution of the complex (A) previously prepared was fed over 3 hours.

The suspension which was obtained was heated to 60°C over about 30 minutes and was kept under stirring at this temperature for about 1 hour.

After cooling to 50°C the suspension was allowed to decant and the liquid phase was removed by syphoning. The solid which was obtained was washed eight times with the same volumes of hexane at room temperature and finally it was dried under vacuum at 50°C for 3 hours. The chemical analysis gave the following results:
- Ti (total) 7.85% (by weight)
- Ti^{III} 6.75% (by weight)
- Mg 14.15% (by weight)
- Al 0.75% (by weight)
- Cl 54.85% (by weight)
- BuOH 11.0% (by weight)
- EtOH 4.0% (by weight)
- Anisole 2.8% (by weight)

### POLYMERIZATION OF ETHYLENE (HDPE)

Into a 2.5 litre autoclave, degassed for 2 hours under N₂ stream at 70°C, 900 ml of hexane containing 0.5 g Al-triisobutyl and 0.0203 g of the spherical component previously described suspended in 100 ml of n-hexane were introduced. The whole was stirred, was heated to 85°C and thereafter 6.3 bar of ethylene and 4.7 bar of hydrogen were fed. The polymerization lasted 3 hours and during this time ethylene was supplied in such a way to keep the pressure constant. After 3 hours the reaction was stopped by immediately discharging the ethylene and hydrogen. 385 g of polymer were obtained having the following characteristics:
- MIE 3.7 G/10 MIN
- MIF/MIE 29
- morphology spherical
- poured bulk density 0.38 g/cm³

## Claims

1. Catalyst components for the polymerization of olefins CH₂=CHR, wherein R is hydrogen or a hydrocarbon radical having 1-10 carbon atoms, comprising, supported on a magnesium halide in spherical form having a mercury porosity higher than 0.5 cm³/g, the product of the reaction of:
(I) a titanium compound containing at least one link selected from Ti-halogen and Ti-OR^{I}, wherein R^{I} is a hydrocarbon radical having 1-12 carbon atoms or a COR group, where R has the above-given meaning; with
(II) the solid obtained from the decomposition, to form magnesium dihalide or a product containing magnesium dihalide, of a complex of formula:
MgX₂·nAlR^{II}X₂^{I}·pAlX₃ (A)
wherein X is chlorine or bromine; X^{I} is chlorine, bromine or an alkoxy group; R^{II} is a hydrocarbon radical containing up to 20 carbon atoms; n is a number from 1 to 6; p is a number from O to 1; (n+p) is a number comprised between 1 and 6 inclusive.

2. Catalyst components according to claim 1 wherein the support has sizes comprised between 5 and 150 µm, porosity comprised between 0.8 and 2.2 cm³/g and pore radius such that at least 50% of the porosity is due to pores having radius higher than 10000 Å and wherein the magnesium halide is MgCl₂.

3. Catalyst components according to claim 2 wherein the titanium compound (I) has the formula XₙTi(OR^{I})_{y-n}, wherein X is halogen, R^{I} is a hydrocarbon radical having 1-12 carbon atoms or a COR group, y is the valency of the titanium and n is an integer comprised between 0 and y inclusive.

4. Catalyst components according to claim 3, wherein the titanium compound (I) is selected from TiCl₄, TiBr₄, TiCl₃, Ti(O-n-C₃H₇)₂Cl_{2,} Ti(O-n-C₄H₉)Cl₃, TiCl₃OCH₃, Ti(O-n-C₄H₉)₂Cl₂, Ti(OOC-C₆H₅)Cl₃, Ti(O-n-C₃H₇)₄, Ti(O-n-C₄H₉)₄ and Ti(OC₆H₅)₄.

5. Catalyst components according to claim 2 wherein the titanium compound (I) is selected from Ti[N(C₂H₅)₂]Cl₃ and Ti[N(C₆H₅)₂]Cl₃.

6. Catalyst components according to claim 2 wherein in the complex (A) R^{II} is a hydrocarbon radical having 1-10 carbon atoms and X, X^{I} are chlorine.

7. Catalyst components according to claim 6 wherein the complex (A) is selected from MgCl₂·2.5Al(i-C₄H₉)Cl_{2,} MgCl₂·2AlEtCl₂ and MgCl₂·1.5Al(n-C₄H₉)Cl₂.

8. Catalyst components according to claim 2 comprising an electron donor compound.

9. Catalyst components according to claim 8 wherein the electron donor compound is selected from ethers and alkyl, cycloalkyl and aryl esters of aromatic carboxylic acids.

10. Catalyst components according to claim 9 wherein the electron donor compound is selected from di-n-butylether, di-isopropylether, di-isoamylether, anisole, ethyl acetate, cyclohexyl acetate, methyl-p-toluate, ethyl-p-anisate, n-butyphthalate, di-isobutylphthalate, di-noctylphthalate.

11. Catalyst components according to claim 8 wherein the electron donor compound is selected from the silicon compounds containing at least one OR group.

12. Catalyst components according to claim 2, wherein the support is prepared by dealcoholation of spherical adducts MgX₂·nR^{I}OH, wherein X is halogen, R^{I} is a hydrocarbon radical having 1-12 carbon atoms and n is an integer comprised between 2 and 6.

13. Catalyst components according to claim 12 wherein R^{I} is selected from ethyl, propyl and butyl.

14. Process for the preparation of catalytic components according to claim 1 or 2 wherein the spherical support is impregnated with a hydrocarbon solution of the titanium compound (I) and is subsequently reacted with the complex (A).

15. Process according to claim 14 wherein the complex (A) is dissolved in an excess of Al-dialkyl halide.

16. Process for the preparation of catalytic components according to claim 1 or 2 wherein the support is treated with a solution of the complex (A) and is subsequently reacted with the titanium compound (I).

17. Process according to claim 16 wherein the reaction between the support and the complex (a) is carried out in an excess of Al-dialkyl halide.

18. Process for the preparation of catalytic components according to claim 1 or 2 wherein the solid (II) is obtained by decomposition of the complex (A) with gaseous anhydrous hydrochloric acid.

19. Process for the preparation of catalytic components according to claim 1 or 2 wherein the solid (II) is obtained by decomposition of the complex (A) with Al-trialkyl.

20. Process for the preparation of catalytic components according to claim 1 or 2 wherein the solid (II) is obtained by decomposition of the complex (A) with aliphatic or cycloaliphatic alcohols.

21. Catalysts for the polymerization of olefins CH₂=CHR wherein R is hydrogen or a hydrocarbon radical having 1-10 carbon atoms, comprising the components according to one or more of claims from 1 to 13 and an Al-alkyl compound.

22. Catalyst according to claim 21 wherein the Al-alkyl compound is Al-trialkyl.

23. Catalysts according to claim 21 comprising also an electron donor compound (external donor).

24. Catalysts according to claim 23 wherein the external donor compound is present in molar ratios electron donor/magnesium comprised between 0.01 and 10.

25. Catalysts according to claim 23 wherein the external donor compound contains at least one nitrogen atom.

26. Catalysts according to claim 23 wherein the external donor compound is selected between 2,2,6,6-tetramethylpiperidine, N-methyl-2,2,6,6-tetramethylpiperidine, tetramethydilaminoethane, tetramethyldiaminomethane, 2,2-dimethyldihydroquinoline, Al-diethyl-2,2,6,6-tetramethylpiperidide, benzonitrile and anisonitrile.

27. Catalysts according to claim 23 wherein the external donor compound is selected from the silicon compounds containing at least one Si-OR link.

28. Process for the polymerization of olefins CH₂=CHR, wherein R is hydrogen or a hydrocarbon radical having 1-10 carbon atoms comprising the use of catalysts according to claim 21.

29. Process for the preparation of (co)polymers of ethylene, containing up to 20% by mole of an alpha-olefin having from 3 to 12 carbon atoms, comprising the use of catalysts according to claim 21.

30. Process according to claim 29 wherein the alpha-olefin is selected from l-butene, l-hexene, 4-methyl-l-pentene, l-octene.

31. Process for the preparation of elastomeric copolymers of ethylene with alpha-olefins having from 3 to 12 carbon atoms, said copolymers containing from 20% to 80% by mole of units derived from ethylene, comprising the use of catalysts according to claim 21.

32. Process according to claim 31 wherein smaller proportions of units deriving from a diene or polyene are present in the copolymer.

## Patentansprüche

1. Katalysatorkomponenten zur Polymerisation von Olefinen CH₂=CHR, wobei R Wasserstoff oder einen Kohlenwasserstoffrest mit 1-10 Kohlenstoffatomen bedeutet, umfassend, getragen auf einem Magnesiumhalogenid in Kugelform mit einer Quecksilberporosität höher 0,5 cm³/g, das Reaktionsprodukt von:
(I) einer Titanverbindung, die mindestens eine Bindung, ausgewählt aus Ti-Halogen und Ti-OR¹, enthält, wobei R¹ einen Kohlenwasserstoffrest mit 1-12 Kohlenstoffatomen oder eine Gruppe COR bedeutet, wobei R die vorstehend angeführte Bedeutung aufweist; mit
(II) dem unter Bildung von Magnesiumdihalogenid oder einem Magnesiumdihalogenid enthaltenden Produkt aus der Zersetzung eines Komplex der Formel:
MgX₂·nAlR^{II}X₂^{I}·pAlX₃ (A)
worin X Chlor oder Brom bedeutet; X¹ Chlor, Brom oder eine Alkoxygruppe bedeutet; R^{II} einen Kohlenwasserstoffrest mit bis zu 20 Kohlenstoffatomen bedeutet; n eine Zahl von 1 bis 6 bedeutet; p eine Zahl von 0 bis 1 bedeutet; (n+p) eine Zahl, umfaßt zwischen 1 und 6, einschließlich, bedeutet, erhaltenen Feststoff.

2. Katalysatorkomponenten nach Anspruch 1, wobei der Träger Größen, umfaßt zwischen 5 und 150 µm, eine Porosität, umfaßt zwischen 0,8 und 2,2 cm³/g, und einen Porenradius, so daß mindestens 50% der Porosität aufgrund von Poren mit einem Radius größer 10000 Å vorliegen, aufweist und wobei das Magnesiumhalogenid MgCl₂ ist.

3. Katalysatorkomponenten nach Anspruch 2, wobei die Titanverbindung (I) die Formel XₙTi(OR^{I})_{y-n} aufweist, worin X Halogen bedeutet, R^{I} einen Kohlenwasserstoffrest mit 1-12 Kohlenstoffatomen oder eine Gruppe COR bedeutet, y die Wertigkeit für Titan ist und n eine ganze Zahl, umfaßt zwischen 0 und y, einschließlich, ist.

4. Katalysatorkomponenten nach Anspruch 3, wobei die Titanverbindung (I) ausgewählt ist aus TiCl₄, TiBr₄, TiCl₃, Ti(O-n-C₃H₇)₂Cl₂, Ti(O-n-C₄H₉)Cl₃, TiCl₃OCH₃, Ti(O-n-C₄H₉)₂Cl₂, Ti(OOC-C₆H₅)Cl₃, Ti(O-n-C₃H₇)₄, Ti(O-n-C₄H₉)₄ und Ti(OC₆H₅)₄.

5. Katalysatorkomponenten nach Anspruch 2, wobei die Titanverbindung (I) ausgewählt ist aus Ti[N(C₂H₅)₂]Cl₃ und Ti[N(C₆H₅)₂]Cl₃·

6. Katalysatorkomponenten nach Anspruch 2, wobei in dem Komplex (A) R^{II} einen Kohlenwasserstoffrest mit 1-10 Kohlenstoffatomen bedeutet und X, X^{I} Chlor darstellen.

7. Katalysatorkomponenten nach Anspruch 6, wobei der Komplex (A) ausgewählt ist aus MgCl₂·2,5Al(i-C₄H₉)Cl₂, MgCl₂·2AlEtCl₂ und MgCl₂·1,5Al(n-C₄H₉)Cl₂.

8. Katalysatorkomponenten nach Anspruch 2, umfassend eine Elektronendonorverbindung.

9. Katalysatorkomponenten nach Anspruch 8, wobei die Elektronendonorverbindung ausgewählt ist aus Ethern und Alkyl-, Cycloalkyl- und Arylestern von aromatischen Carbonsäuren.

10. Katalysatorkomponenten nach Anspruch 9, wobei die Elektronendonorverbindung ausgewählt ist aus Di-n-butylether, Diisopropylether, Diisoamylether, Anisol, Essigsäureethylester, Essigsäurecyclohexylester, p-Toluylsäuremethylester, p-Anissäureethylester, Phthalsäure-n-butylester, Phthalsäurediisobutylester, Phthalsäure-di-n-octylester.

11. Katalysatorkomponenten nach Anspruch 8, wobei die Elektronendonorverbindung ausgewählt ist aus den Siliciumverbindungen, die mindestens eine Gruppe OR enthalten.

12. Katalysatorkomponenten nach Anspruch 2, wobei der Träger durch Dealkoholisierung von kugelförmigen Addukten MgX₂.nR^{I}OH hergestellt wird, wobei X Halogen bedeutet, R^{I} einen Kohlenwasserstoffrest mit 1-12 Kohlenstoffatomen bedeutet und n eine ganze Zahl, umfaßt zwischen 2 und 6, ist.

13. Katalysatorkomponenten nach Anspruch 12, wobei R^{I} ausgewählt ist aus Ethyl, Propyl und Butyl.

14. Verfahren zur Herstellung von katalytischen Komponenten nach Anspruch 1 oder 2, wobei der kugelförmige Träger mit einer Kohlenwasserstofflösung der Titanverbindung (I) imprägniert wird und anschließend mit Komplex (A) umgesetzt wird.

15. Verfahren nach Anspruch 14, wobei der Komplex (A) in einem Überschuß von Al-Dialkylhalogenid gelöst ist.

16. Verfahren zur Herstellung katalytischer Komponenten nach Anspruch 1 oder 2, wobei der Träger mit einer Lösung des Komplex (A) behandelt wird und anschließend mit der Titanverbindung (I) umgesetzt wird.

17. Verfahren nach Anspruch 16, wobei die Umsetzung zwischen dem Träger und dem Komplex (A) in einem Überschuß von Al-Dialkylhalogenid ausgeführt wird.

18. Verfahren zur Herstellung katalytischer Komponenten nach Anspruch 1 oder 2, wobei der Feststoff (II) durch Zersetzung des Komplex (A) mit gasförmigem, wasserfreiem Chlorwasserstoff erhalten wird.

19. Verfahren zur Herstellung katalytischer Komponenten nach Anspruch 1 oder 2, wobei der Feststoff (II) durch Zersetzung von Komplex (A) mit Al-Trialkyl erhalten wird.

20. Verfahren zur Herstellung katalytischer Komponenten nach Anspruch 1 oder 2, wobei der Feststoff (II) durch Zersetzung von Komplex (A) mit aliphatischen oder cycloaliphatischen Alkoholen erhalten wird.

21. Katalysatoren zur Polymerisation von Olefinen CH₂=CHR, wobei R Wasserstoff oder einen Kohlenwasserstoffrest mit 1-10 Kohlenstoffatomen bedeutet, umfassend die Komponenten nach einem oder mehreren der Ansprüche 1 bis 13 und eine Al-Alkyl-Verbindung.

22. Katalysator nach Anspruch 21, wobei die Al-Alkyl-Verbindung Al-Trialkyl ist.

23. Katalysatoren nach Anspruch 21, ebenfalls eine Elektronendonorverbindung (äußerer Donor) umfassend.

24. Katalysatoren nach Anspruch 23, wobei die äußere Donorverbindung in Molverhältnissen Elektronendonor/Magnesium, umfaßt zwischen 0,01 und 10, vorliegt.

25. Katalysatoren nach Anspruch 23, wobei die äußere Donorverbindung mindestens ein Stickstoffatom enthält.

26. Katalysatoren nach Anspruch 23, wobei die äußere Donorverbindung ausgewählt ist aus 2,2,6,6-Tetramethylpiperidin, N-Methyl-2,2,6,6-tetramethylpiperidin, Tetramethyldiaminoethan, Tetramethyldiaminomethan, 2,2-Dimethyldihydrochinolin, Al-Diethyl-2,2,6,6-tetramethylpiperidid, Benzonitril und Anisonitril.

27. Katalysatoren nach Anspruch 23, wobei die äußere Donorverbindung ausgewählt ist aus Siliciumverbindungen, die mindestens eine Si-OR-Bindung enthalten.

28. Verfahren zur Polymerisation von Olefinen CH₂=CHR, wobei R Wasserstoff oder einen Kohlenwasserstoffrest mit 1-10 Kohlenstoffatomen bedeutet, umfassend die Verwendung von Katalysatoren nach Anspruch 21.

29. Verfahren zur Herstellung von (Co)polymeren von Ethylen mit bis zu 20 Molprozent eines α-Olefins, das 3 bis 12 Kohlenstoffatome aufweist, umfassend die Verwendung von Katalysatoren nach Anspruch 21.

30. Verfahren nach Anspruch 29, wobei das α-Olefin ausgewählt ist aus 1-Buten, 1-Hexen, 4-Methyl-1-penten, 1-Octen.

31. Verfahren zur Herstellung von elastomeren Copolymeren aus Ethylen mit α-Olefinen, die 3 bis 12 Kohlenstoffatome aufweisen, wobei die Copolymere 20 bis 80 Molprozent von Ethylen abgeleitete Einheiten enthalten, umfassend die Verwendung von Katalysatoren nach Anspruch 21.

32. Verfahren nach Anspruch 31, wobei geringere Anteile an Einheiten, abgeleitet von einem Dien oder Polyen, in dem Copolymer vorliegen.

## Revendications

1. Composants de catalyseur de la polymérisation d'oléfines CH₂=CHR, où R est un hydrogène ou un radical hydrocarboné comportant 1 à 10 atomes de carbone, comprenant, supporté sur un halogénure de magnésium sous forme sphérique présentant une porosité au mercure supérieure à 0,4 cm³/g, le produit de la réaction de :
(1) un dérivé du titane contenant au moins une liaison choisie parmi Ti-halogène et Ti-OR¹ où R¹ est un radical hydrocarboné comportant 1 à 12 atomes de carbone ou un groupe COR, où R a la signification ci-dessus ; avec
(II) le solide obtenu à partir de la décomposition, pour former un dihalogénure de magnésium ou un produit contenant du dihalogénure de magnésium, d'un complexe de formule :
MgX₂.nAlR^{II}X₂¹.pAlX₃ (A)
dans laquelle :
X représente le chlore ou le brome ;
X¹ est le chlore, le brome ou un groupe alcoxy ;
R^{II} est un radical hydrocarboné comportant jusqu'à 20 atomes de carbone ;
n est un nombre de 1 à 6 ;
p est un nombre de 0 à 1 ;
(n+p) est un nombre compris entre 1 et 6, bornes comprise.

2. Composants de catalyseur selon la revendication 1, dans lesquels le support a des dimensions comprises entre 5 et 150 µm, une porosité comprise entre 0,8 et 2,2 cm³/g et un rayon de pore tel qu'au moins 50 % de la porosité soient dus à des pores présentant un rayon supérieur à 10 000 Angstroems et où l'halogénure de magnésium est MgCl₂.

3. Composants de catalyseur selon la revendication 2, dans lesquels le dérivé de titane (I) répond à la formule :
XₙTi(OR¹)_{y-n}
dans laquelle :
X est un halogène ;
R¹ est un radical hydrocarboné comportant 1 à 12 atomes de carbone ou un groupe COR ;
y est la valence du titane ; et
n est un nombre entier compris entre 0 et y, bornes comprises.

4. Composants de catalyseur selon la revendication 3, dans lesquels le dérivé de titane (I) est choisi parmi TiCl₄, TiBr₄, TiCl₃, Ti(O-n-C₃H₇)₂Cl₂, Ti(O-n-C₄H₉)₂Cl₃, TiCl₃OCH_{3,} Ti(O-n-C₄H₉)₂Cl_{2,} Ti(OOC-C₆H₅)Cl₃, Ti(O-n-C₃H₇)₄, Ti(O-n-C₄H₉)₄ et Ti(OC₆H₅)₄.

5. Composants de catalyseur selon la revendication 2, dans lesquels le dérivé de titane (I) est choisi parmi Ti[N(C₂H₅)₂]Cl₃ et Ti[N(C₆H₅)₂]Cl₃.

6. Composants de catalyseur selon la revendication 2, dans lesquels dans le complexe (A), R^{II} est un radical hydrocarboné comprenant 1 à 10 atomes de carbone et X et X¹ sont des chlores.

7. Composants de catalyseur selon la revendication 6, dans lesquels le complexe (A) est choisi parmi MgCl₂.2,5Al(i-C₄H₉)Cl₂, MgCl₂.2AlEtCl₂ et MgCl₂, 1,5Al(n-C₄H₉)Cl₂.

8. Composants de catalyseur selon la revendication 2, comprenant un composé donneur d'électron.

9. Composants de catalyseur selon la revendication 8, dans lesquels le composé donneur d'électron est choisi parmi les éthers et les esters d'alkyle, de cycloalkyle et d'aryle d'acides carboxyliques aromatiques.

10. Composants de catalyseur selon la revendication 2, dans lesquels le composé donneur d'électrons est choisi parmi di-n-butyléther, diisopropyléther, diisoamyléther. anisole, acétate d'éthyle, acétate de cyclohexyle, p-toluate de méthyle. para-anisate d'éthyle, phtalate de n-butyle, phtalate de diisobutyle, phtalate de di-n-octyle.

11. Composants de catalyseur selon la revendication 8, dans lesquels le composé donneur d'électrons est choisi parmi les dérivés du silicium comportant au moins un groupe OR.

12. Composants de catalyseur selon la revendication 2, dans lesquels le support est obtenu par désalcoolisation des adducts sphériques MgX₂.nR¹OH, où X est un halogène. R¹ est un radical hydrocarboné comportant 1 à 12 atomes de carbone et n est un nombre entier compris entre 2 et 6.

13. Composants de catalyseur selon la revendication 12, dans lesquels R¹ est choisi parmi éthyle, propyle et butyle.

14. Procédé de préparation de composants catalytiques selon la revendication 1 ou 2, dans lequel on imprègne le support sphérique d'une solution hydrocarbonée du dérivé de titane (I) et le fait ensuite réagir avec le complexe (A).

15. Procédé selon la revendication 14, dans lequel le complexe (A) est dissous dans un excès d'halogénure de dialkylaluminium.

16. Procédé de préparation de composants catalytiques selon la revendication 1 ou 2, dans lequel on traite le support par une solution du complexe (A) et ensuite on le fait réagir avec le dérivé de titane (I).

17. Procédé selon la revendication 16, dans lequel on effectue la réaction entre le support et le complexe (A) dans un excès d'halogénure de dialkylaluminium.

18. Procédé de préparation de composants catalytiques selon la revendication 1 ou 2, dans lequel on obtient le solide (II) par décomposition du complexe (A) par l'acide chlorhydrique gazeux anhydre.

19. Procédé de préparation de composants catalytiques selon la revendication 1 ou 2, dans lequel on obtient le solide (II) par décomposition du complexe (A) par un trialkylaluminium.

20. Procédé de préparation de composants catalytiques selon la revendication 1 ou 2, dans lequel on obtient le solide (II) par décomposition du complexe (A) par des alcools aliphatiques ou cycloaliphatiques.

21. Catalyseurs de la polymérisation d'oléfines CH₂=CHR où R est l'hydrogène ou un radical hydrocarboné comportant 1 à 10 atomes de carbone, comprenant des composants selon l'une ou plusieurs des revendications 1 à 13 et un dérivé alkylaluminium.

22. Catalyseurs selon la revendication 21, dans lesquels le dérivé alkylaluminium est un trialkylaluminium.

23. Catalyseurs selon la revendication 21, comprenant également un dérivé donneur d'électron (donneur externe).

24. Catalyseurs selon la revendication 23, dans lesquels le dérivé donneur externe est présent selon des rapports molaires donneur d'électron/magnésium compris entre 0,01 et 10.

25. Catalyseurs selon la revendication 23, dans lesquels le dérivé donneur externe contient au moins un atome d'azote.

26. Catalyseurs selon la revendication 23, dans lesquels le dérivé donneur externe est choisi parmi 2,2,6,6-tétraméthylpipéridine, N-méthyl-2,2,6,6-tétraméthylpyridine, tétraméthyldiaminoéthane, tétraméthyldiaminométhane, 2,2-diméthyldihydroquinoléine, Al-diéthyl-2,2,6,6-tétraméthylpipéridine. benzonitrile et anisonitrile.

27. Catalyseurs selon la revendication 23, dans lesquels le dérivé donneur externe est choisi parmi les dérivés du silicium comportant au moins une liaison Si-OR.

28. Procédé de polymérisation d'oléfines CH₂=CHR, où R est l'hydrogène ou un radical hydrocarboné comportant 1 à 10 atomes de carbone, comprenant l'utilisation de catalyseurs selon la revendication 21.

29. Procédé de préparation de copolymères d'éthylène contenant jusqu'à 20 % molaires d'alpha-oléfine ayant de 3 à 12 atomes de carbone, comprenant l'utilisation de catalyseurs selon la revendication 21.

30. Procédé selon la revendication 29, dans lequel l'alpha-oléfine est choisi parmi 1-butène, 1-hexène, 4-méthyl-1-pentène, 1-octène.

31. Procédé de préparation de copolymères élastomères d'éthylène avec des alpha-oléfines comportant de 3 à 12 atomes de carbone, ledits copolymères contenant de 20% à 80 % molaires de motifs dérivant de l'éthylène. comprenant l'utilisation de catalyseurs selon la revendication 21.

32. Procédé selon la revendication 31, dans lequel de petites proportions de motifs dérivant d'un diène ou d'un polyène sont présents dans le copolymère.
